# EUROPEAN PATENT APPLICATION

(11) **EP 4 668 694 A1**
(43) Date of publication of application: **24.12.2025**
(21) Application number: 24182926.6
(22) Date of filing: 18.06.2024
(51) Int. Cl.: H04L 41/0866, H04L 41/14, H04L 41/0266, H04L 41/0853, H04L 41/16

(54) **METHOD AND APPARATUS FOR DETERMINING AN ANOMALY IN A CONFIGURATION OF A TELECOMMUNICATION NETWORK**

(71) Applicant: Deutsche Telekom AG, 53113 Bonn (DE)
(72) Inventor: SOBANIA, Alexander, 53757 Sankt Augustin (DE)
(74) Representative: 2SPL Patentanwälte PartG mbB

(57) **Abstract**

Provided is a method for determining an anomaly in a configuration of a telecommunication network, the method including converting the configuration of the telecommunication network into a corresponding query vector representation, retrieving one or more historical vector representations of historical configurations of the telecommunication network stored in a vector database that are most similar to the query vector representation, generating an anomaly warning if a difference between the one or more historical vector representations and the query vector representation exceeds a threshold.

## Description

### Field

The present disclosure generally relates to telecommunication networks, and, more specifically, to methods and apparatuses for determining an anomaly in a configuration of a telecommunication network.

### Background

A telecommunication network is a system that can connect various devices, nodes, and communication channels to facilitate an exchange of information over distances. This information can include voice, data, video, and multimedia signals. These networks may enable communication between individuals, businesses, and devices, supporting a wide range of services and applications.

Components of a telecommunication network include transmission mediums, which can be wired (e.g., copper and fiber-optic cables) or wireless (e.g., radio waves and satellites). Network devices such as switches, routers, base stations, and modems may be involved in managing and directing traffic. Network nodes, including servers and clients, may handle processing and delivery of data. Network protocols may define the rules for communication between these devices.

A core network may form a central part of the telecommunication network, connecting various services and other networks. An access network may connect end-users to the core network and include technologies such as DSL, fiber to the home, Wi-Fi, and cellular networks.

Different types of telecommunication networks exist. The Public Switched Telephone Network (PSTN) is the traditional network for voice communications. Cellular networks, like 2G, 3G, 4G (LTE), and 5G, provide mobile communication services. The Internet is a global network of interconnected systems that supports services like email, web browsing, and file transfer. Local Area Networks (LANs) connect devices within a limited area, such as a home or office, while Wide Area Networks (WANs) cover larger geographic areas. Metropolitan Area Networks (MANs) span cities or large campuses.

Telecommunication networks may support various functions and services, including voice communication, data communication, video communication, and mobile communication. They may also provide essential network services such as VPNs, network security, and network management.

A telecommunications network configuration may be a detailed setup of all components and settings that enable the network to function effectively. This setup may include the design of the network's layout, known as the topology, which determines how various devices like routers and switches are connected. It may also involve hardware components, such as routers, switches, and transmission media like cables and wireless links, which physically connect the network.

The configuration may include software elements, such as operating systems running on network devices and the protocols that govern data transmission, like TCP/IP and HTTP. Additionally, it may involve assigning IP addresses to devices for identification and setting up routing tables to determine the best paths for data to travel through the network. Security measures may also be a part of the configuration, incorporating firewalls to control traffic and encryption to protect data. Quality of Service (QoS) policies may be implemented to prioritize critical network traffic, ensuring reliable service for important applications. Network management tools are used to monitor performance, detect issues, and manage configurations. Backup and redundancy systems may be set up to provide alternative data paths and restore services in case of failures. Access control mechanisms, such as authentication and authorization, may ensure that only authorized users and devices can access the network.

Configuring a telecommunications network involves planning, deploying, maintaining, and regularly updating these elements to keep the network efficient and secure. This setup defines how all the different parts of the network interact and function together to provide reliable communication services.

In telecommunication networks, configuration changes are frequent and crucial. Ensuring these changes do not harm the network, especially in critical nodes, is challenging due to the high volume of changes and parameters involved, which makes using static methods impractical.

Thus, there may be a need for detecting anomalies in planned configuration changes to avoid misconfiguration of the telecommunication network.

### Summary

This need is addressed by methods and apparatus in accordance with the appended claims.

According to a first aspect, the present disclosure provides a method for determining an anomaly in a configuration of a telecommunication network. The method includes converting the configuration of the telecommunication network (or a portion thereof) into a corresponding query vector representation. The method further includes retrieving one or more historical vector representations of historical configurations of the telecommunication network or the portion thereof stored in a vector database that are most similar to the query vector representation. The method further includes generating an anomaly warning if a difference between the one or more historical vector representations and the query vector representation exceeds a threshold.

In some embodiments, converting the configuration includes using a natural language processing (NLP) model to convert a text-based configuration of the telecommunication network into the query vector representation.

In some embodiments, converting the configuration includes generating an embedding for the text-based configuration using a pre-trained transformer model.

In some embodiments, the pre-trained transformer model comprises at least one of Word2Vec, GloVe, FastText, ELMo, BERT, or GPT.

In some embodiments, converting the configuration includes using a graph embedding model to convert a network topology of the configuration of the telecommunication network into the query vector representation.

In some embodiments, the graph embedding model comprises at least one of DeepWalk, Node2Vec, or a Graph Convolutional Network, GCN.

In some embodiments, retrieving one or more historical vector representations from the vector database includes a similarity search based on a distance metric.

In some embodiments, generating the anomaly warning includes computing a similarity score based on the one or more historical vector representations and the query vector representation.

In some embodiments, generating the anomaly warning includes converting the configuration into the corresponding query vector representation, and comparing the query vector representation with the one or more historical vector representations.

In some embodiments, the configuration text comprises at least one of Extensible Markup Language (XML) or JavaScript Object Notation (JSON).

In some embodiments, the method further includes storing a plurality of historical configurations of the telecommunication network in the vector database.

In some embodiments, configuration of the telecommunication network comprises at least one of a base station configuration, a core network configuration, or Network Function Virtualization (NFV) configuration.

According to a further aspect, the present disclosure provides a computer program comprising instructions which, when the program is executed by a computer, cause the computer to carry out the method of any one of the previous embodiments.

According to yet a further aspect, the present disclosure provides an apparatus for determining an anomaly in a configuration of a telecommunication network. The apparatus comprising processing circuitry configured to convert the configuration of the telecommunication network into a corresponding query vector representation. The processing circuitry is further configured to retrieve one or more historical vector representations of historical configurations of the telecommunication network stored in a vector database that are most similar to the query vector representation. The processing circuitry is further configured to generate an anomaly warning if a difference between the one or more historical vector representations and the query vector representation exceeds a threshold.

According to yet a further aspect, the present disclosure provides a method for determining an anomaly in a configuration of a telecommunication network. The method includes comparing a textual description of the configuration with one or more historical textual descriptions of historical configurations of the telecommunication network. The method further includes generating an anomaly warning if a difference between the one or more historical textual descriptions and the textual description exceeds a threshold.

The proposed solution involves using historical configuration changes stored in a vector database. When new changes are applied, the system compares them to the closest historical configurations. If the nearest historical configuration is too dissimilar, the system flags this as an anomaly. This could trigger actions such as halting the change and requesting an additional review by a third party.

### Brief description of the Figures

Some examples of apparatuses and/or methods will be described in the following by way of example only, and with reference to the accompanying figures, in which
- Fig. 1: schematically illustrates a mobile communications network;
- Fig. 2: a flowchart of a method for determining an anomaly in a configuration of a telecommunication network according to an embodiment of the present disclosure; and
- Fig. 3: a block diagram of an apparatus for determining an anomaly in a configuration of a telecommunication network according to an embodiment of the present disclosure.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

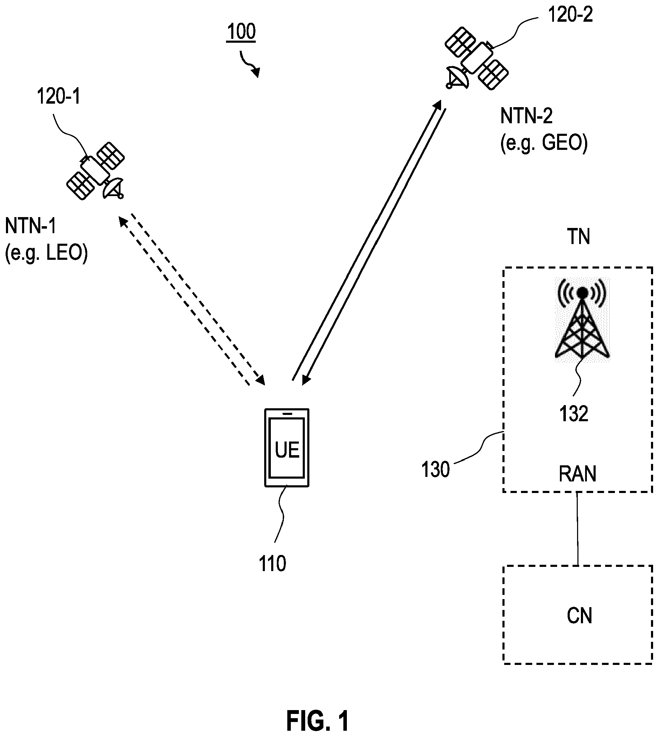

**Fig. 1** schematically illustrates an example network 100, according to various aspects discussed herein. Example network 100 may include one or more UEs 110, one or more first satellites 120-1 forming a first non-terrestrial network NTN-1, and one or more second satellites 120-2 forming a second NTN-2. A terrestrial network (TN) also included by example network 100 comprises a radio access network (RAN) 130 including one or more RAN nodes 132, and a core network (CN). The satellites 120 (e.g., of a global navigation satellite system (GNSS)) may be in communication with UE 110 and/or and RAN 130.

The systems and devices of example network 100 may operate in accordance with one or more communication standards, such as 2^{nd} generation (2G), 3^{rd} generation (3G), 4^{th} generation (4G) (e.g., long-term evolution (LTE)), and/or 5^{th} generation (5G) (e.g., new radio (NR)) communication standards of the 3^{rd} generation partnership project (3GPP). Additionally, or alternatively, one or more of the systems and devices of network 100 may operate in accordance with other communication standards and protocols discussed herein, including future versions or generations of 3GPP standards or institute of electrical and electronics engineers (IEEE) standards, for example.

UE 110 may include smartphones (e.g., handheld touchscreen mobile computing devices connectable to one or more wireless communication networks). Additionally, or alternatively, UEs 110 may include other types of mobile or non-mobile computing devices capable of wireless communications, such as personal data assistants (PDAs), pagers, laptop computers, desktop computers, wireless handsets, etc. In some implementations, UEs 110 may include internet of things (IoT) devices (or loT UEs) that may comprise a network access layer designed for low-power loT applications utilizing short-lived UE connections.

UE 110 may communicate and establish connections with (e.g., be communicatively coupled) with RAN 130, which may involve one or more wireless channels, each of which may comprise a physical communications interface/layer. In some implementations, UE 110 may be configured with dual connectivity (DC) as a multi-radio access technology (multi-RAT) or multi-radio dual connectivity (MR-DC), where a multiple receive and transmit (Rx/Tx) capable UE may use resources provided by different network nodes that may be connected via non-ideal backhaul (e.g., where one network node provides NR access and the other network node provides either E-UTRA for LTE or NR access for 5G).

RAN 130 may include one or more RAN nodes 132 that enable the connections to be established between UEs 110 and RAN 130. RAN nodes 132 may include network access points configured to provide radio baseband functions for data and/or voice connectivity between users and the network based on one or more of the communication technologies described herein (e.g., 2G, 3G, 4G, 5G, WiFi, etc.). As examples therefore, a RAN node may be an E-UTRAN Node B (e.g., an enhanced Node B, eNodeB, eNB, 4G base station, etc.), a next generation base station (e.g., a 5G base station, NR base station, next generation eNBs (gNB), etc.). RAN nodes 132 may include a roadside unit (RSU), a transmission reception point (TRxP or TRP), and one or more other types of ground stations (e.g., terrestrial access points). In some scenarios, RAN node 132 may be a dedicated physical device, such as a macro-cell base station, and/or a low power (LP) base station for providing femtocells, picocells or other like having smaller coverage areas, smaller user capacity, or higher bandwidth compared to macro-cells. As described below, in some implementations, satellites 120 may operate as base stations (e.g., RAN nodes 132) with respect to UEs 110. As such, references herein to a base station, RAN node 132, etc., may involve implementations where the base station, RAN node 132, etc., is a terrestrial network node and also to implementations where the base station, RAN node 132, etc., is a non-terrestrial network node (e.g., satellite 120).

As shown, RAN 130 may be connected (e.g., communicatively coupled) to CN. CN may comprise a plurality of network elements, which are configured to offer various data and telecommunications services to customers/subscribers (e.g., users of UEs 110) who are connected to the CN via the RAN 130. In some implementations, CN may include an evolved packet core (EPC), a 5G CN, and/or one or more additional or alternative types of CNs.

As shown, example network 100 may include one or more NTNs that may comprise one or more respective satellites 120. Satellites 120 may be in communication with UEs 110 via service link or wireless interface and/or RAN 130 via feeder links or wireless interfaces. In some implementations, satellite 120 may operate as a passive or transparent network relay node regarding communications between UE 110 and the terrestrial network (e.g., RAN 130). In some implementations, satellite 120 may operate as an active or regenerative network node such that satellite 120 may operate as a base station to UEs 110 (e.g., as a gNB of RAN 130) regarding communications between UE 110 and RAN 130. In some implementations, satellites 120 may communicate with one another via a direct wireless interface or an indirect wireless interface (e.g., via RAN 130). Additionally, or alternatively, satellite 120 may include a GEO satellite, MEO, LEO satellite, or another type of satellite. Satellite 120 may also, or alternatively pertain to one or more satellite systems or architectures, such as a global navigation satellite system (GNSS), global positioning system (GPS), global navigation satellite system (GLONASS), BeiDou navigation satellite system (BDS) , etc. In some implementations, satellites 120 may operate as bases stations (e.g., RAN nodes 132) with respect to UEs 110. As such, references herein to a base station, RAN node 132, etc., may involve implementations where the base station, RAN node 132, etc., is a terrestrial network node and implementation, where the base station, RAN node 132, etc., is a non-terrestrial network node (e.g., satellite 120).

In telecommunication networks, such as network 100, non-terrestrial network NTN, RAN 130, or CN, configuration changes may be frequent and crucial. Ensuring these changes do not harm the network, especially in critical nodes, is challenging due to the high volume of changes and parameters involved, which makes using static methods impractical. Embodiments of the present disclosure address detecting anomalies in planned configuration changes to avoid misconfiguration of the telecommunication network.

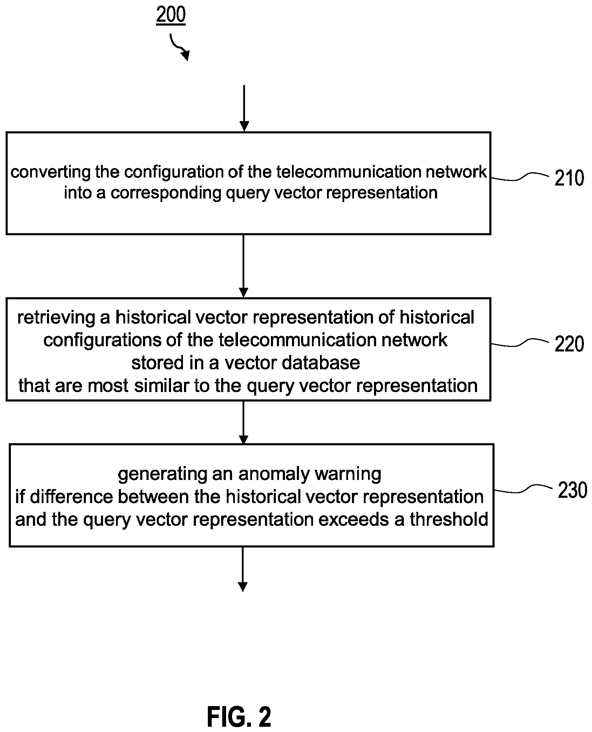

**Fig. 2** illustrates a flowchart of a method 200 for determining an anomaly in a configuration of a telecommunication network (or a portion thereof). The telecommunication network may include various interconnected devices and systems to facilitate communication and data transfer. The telecommunication network may be a LAN, a WAN, a MAN, or a mobile telecommunication network (like network 100), for example. Method 100 may be a computer-implemented method executed by a computer or a programmable hardware device.

Method 200 includes an act 210 of converting the configuration of the telecommunication network into a corresponding query vector representation. Converting 210 the configuration of the telecommunication network to a corresponding query vector representation may involve transforming detailed textual and/or graph-based information about the network configuration into a mathematical format that a computer can process and analyze. This may involve taking textual and/or graph-based data that describes how the network is arranged, including details about devices, connections, and settings, and encoding this information into a numerical format known as a vector.

The telecommunication network configuration refers to the specific arrangement and setup of hardware and software components within the telecommunications network. This may include an interconnection of devices such as routers, switches, servers, base transceiver stations (BTS), and mobile switching centers (MSC), as well as the configuration of protocols, services, and settings that govern the communication and data transfer within the network. The configuration may encompass both physical and logical aspects, detailing how network elements are organized, how they communicate, and how resources are allocated and managed to ensure efficient and reliable operation.

The vector representation may be a series of numbers that captures the essential features and relationships described by the network configuration. By converting the network configuration into a vector, computers can more easily compare, search, and manipulate this data using mathematical and machine learning algorithms. This process may allow for efficient analysis, such as identifying similarities between different network configurations, detecting anomalies, or optimizing network performance. In essence, it is about translating the complex, descriptive information of the telecommunication network into a format that enables advanced computational techniques to be applied, facilitating better understanding and management of the network.

Method 200 further includes an act 220 of retrieving one or more historical vector representations of historical configurations of the telecommunication network stored in a vector database that are most similar to the query vector representation. Retrieving 220 the one or more historical vector representations includes finding past records of feasible network configurations that are stored in a special type of database (vector database). The past records are encoded in a mathematical format called vectors. The process involves comparing the vector representation of the current/planned network configuration (the query vector) with the previously stored vectors. The goal is to identify and retrieve one or more past network configurations that most closely match the current one. This comparison may help in analyzing how similar the current or planned network configuration is to previous ones, which can be useful for identifying patterns, making decisions, or troubleshooting issues based on historical data.

Method 200 further includes an act 230 of generating an anomaly warning if a difference between the one or more historical vector representations and the query vector representation exceeds a threshold. This means that method 200 will issue a warning if the current or planned network configuration is significantly different from past (feasible) configurations. The system may compare the vector representation of the current/planned network configuration with those of previous configurations stored in the database. If the difference between them is greater than a pre-set limit (the threshold), this indicates that the current/planned configuration might be unusual or potentially problematic. As a result, the system may generate an alert to notify users of this potential anomaly, allowing them to investigate and address any issues.

The act 210 of converting the network configuration into the corresponding query vector representation may include using a natural language processing (NLP) model to convert a text-based network configuration into the query vector representation. This means that the system may use language processing techniques to transform a written description of the network configuration into a numerical format that computers can analyze. The configuration of the network may be described in text form. This could include descriptions of devices, connections, settings, and other network elements.

The NLP model is an algorithm designed to understand and process human language. The NLP model may take the text-based network configuration and interpret it, understanding key elements and relationships described in the network configuration. It then converts this information into a query vector representation. The vector is a series of numbers that represents complex information in a way that computers can work with. In this context, the vector captures the essential features and structure of the network configuration described in the text. By using an NLP model, the system can automatically read and understand the written network configuration and transform it into a numerical format. This allows the system to compare it with other configurations, detect anomalies, and perform other analyses efficiently. This method makes it possible to handle and process large amounts of configuration data quickly and accurately.

The NLP model may comprise several components and processes that allow it to process and make sense of text data. The primary components include tokenization, part-of-speech tagging, named entity recognition (NER), parsing, and semantic analysis. Tokenization refers to a process of breaking down text into smaller units, such as words or phrases, called tokens. This helps the model to analyze the text more effectively. Part-of-speech tagging involves identifying grammatical parts of speech (nouns, verbs, adjectives, etc.) for each token. It helps the model understand the role of each word in a sentence. NER identifies and classifies key elements in the text, such as names of people, organizations, locations, dates, and more. Parsing involves analyzing the grammatical structure of the text to understand the relationships between words and phrases. Semantic analysis focuses on understanding the meaning and context of the text. It involves interpreting the relationships between words to grasp the overall message.

The NLP model may be trained on large datasets containing examples of network configurations. During training, the model may learn patterns and structures in the (ground-truth) network configurations, allowing it to understand and generate text based on the learned knowledge. Modern NLP models may use deep learning techniques, particularly neural networks. A type of neural network used in NLP is the transformer model, which includes architectures like BERT (Bidirectional Encoder Representations from Transformers) and GPT (Generative Pre-trained Transformer). These models are pre-trained on vast amounts of text data and can be fine-tuned for specific tasks, such as related to telecommunication network configurations.

Thus, converting 110 the network configuration into the corresponding query vector representation may include generating an embedding for the network configuration using a pre-trained transformer model. A pre-trained transformer model is a type of artificial intelligence model that has been previously trained on a large dataset to understand and generate human language. The transformer architecture uses self-attention mechanisms to process and contextualize input data, enabling the model to capture complex patterns and relationships within the data. After the initial pre-training phase, the model can be fine-tuned for specific tasks, such as text classification, translation, or question answering, by training it on smaller, task-specific datasets, such as network configurations. This pre-training allows the model to leverage its prior knowledge, improving its performance and efficiency on new tasks. The pre-trained transformer model may comprise at least one of a custom model, Word2Vec, GloVe, FastText, ELMo, BERT, or GPT, which are all models or algorithms used in natural language processing (NLP) to create word embeddings or process text.

Word2Vec is a model developed by Google that can create word embeddings. It uses neural networks to learn word associations from large datasets. There are two main types of Word2Vec architectures. Continuous Bag of Words (CBOW) predicts the current word based on its context. Skip-gram predicts the surrounding words given the current word. Word2Vec embeddings place semantically similar words close to each other in the vector space. Word2Vec could be used to generate embeddings by training on a corpus of textual descriptions of telecommunication network configurations. The model may learn to represent each word in the context of surrounding words, capturing the relationships and similarities between different network components and configurations. This method would be useful for capturing the general semantics of configuration elements.

GloVe (Global Vectors for Word Representation), developed by researchers at Stanford, may be another option for generating word embeddings. Unlike Word2Vec, which is predictive, GloVe is based on matrix factorization techniques. It uses global word-word co-occurrence statistics from a corpus to create embeddings. The resulting vectors capture both global statistics and local context. GloVe could also be used to create embeddings by training on a large corpus of network configuration texts. By capturing the global word-word co-occurrence statistics, GloVe embeddings can represent the broader context and relationships between words in the descriptions. This approach can be useful for understanding the overall structure and common patterns in network configurations.

FastText, developed by Facebook's Al Research (FAIR) lab, extends Word2Vec by representing words as bags of character n-grams. This means each word is represented as a collection of its subword units, which helps handle rare words and misspellings better than Word2Vec or GloVe. FastText can generate embeddings for words that were not seen during training by summing the embeddings of their n-grams. FastText extends Word2Vec by considering subword information, making it particularly useful for handling domain-specific vocabulary and variations in terminology commonly found in network configurations. It can generate more robust embeddings by breaking down words into character n-grams, which is beneficial for capturing nuanced meanings in technical texts.

ELMo, developed by the Allen Institute for Al, is a deep contextualized word representation model. Unlike Word2Vec and GloVe, ELMo generates word embeddings based on the entire sentence, capturing context-dependent aspects of word meaning. It uses a bidirectional LSTM (Long Short-Term Memory) network to model complex characteristics of word usage (e.g., syntax and semantics) and how these uses vary across linguistic contexts. ELMo provides context-dependent embeddings by considering the entire sentence when generating embeddings for each word. This means that ELMo can capture the specific context in which network configuration terms are used, providing more accurate and dynamic representations. It is useful for understanding the specific roles and relationships of configuration elements within their contextual usage.

BERT, developed by Google, is a deep learning model based on the Transformer architecture. BERT is bidirectional, meaning it considers the context from both the left and the right sides of a word. This allows it to generate more accurate and contextually relevant word embeddings. BERT has been pre-trained on vast amounts of text and can be fine-tuned for various NLP tasks such as question answering and text classification. BERT can be used to create highly contextualized embeddings for network configuration texts by considering the bidirectional context of each word. Fine-tuning BERT on a corpus of network configuration descriptions can help the model understand the specific language and context of the domain, leading to precise and contextually aware embeddings. This may be particularly useful for capturing complex dependencies and relationships between configuration elements.

GPT, developed by OpenAl, is another deep learning model based on the Transformer architecture. Unlike BERT, GPT is primarily unidirectional, processing text from left to right. GPT excels in generating coherent and contextually appropriate text, making it suitable for tasks like text completion, translation, and conversation generation. GPT-4, one of the latest versions, has been trained on a vast amount of data and has a significant number of parameters, allowing it to perform a wide range of NLP tasks with high accuracy. GPT can generate contextual embeddings by processing the text sequentially. By fine-tuning GPT on a dataset of network configuration descriptions, it can learn to generate coherent and contextually appropriate embeddings for each word or phrase.

For training, a large dataset of textual descriptions of telecommunication network configurations may be collected. The chosen model (e.g., own custom model, Word2Vec, GloVe, FastText, ELMo, BERT, or GPT) may be trained on this dataset to learn the specific language and patterns of the domain. The trained model may then be used to convert new textual descriptions of network configurations into embeddings. The embeddings may then be used for various tasks, such as anomaly detection, configuration comparison, optimization, and more.

The network configuration can be represented using structured data formats like Extensible Markup Language (XML) or JavaScript Object Notation (JSON) to facilitate automated processing, management, and analysis. This means that the descriptions and settings of the telecommunication network's setup can be stored and represented using either XML or JSON formats. XML is a markup language that defines a set of rules for encoding documents in a format that is both human-readable and machine-readable. In the context of network configurations, XML can be used to describe the various components of the network, such as devices, connections, and settings, in a structured format. XML uses tags to define elements and attributes to provide additional information about those elements. The hierarchical structure allows for nesting of elements, which can represent complex configurations. JSON is a lightweight data-interchange format that is easy for humans to read and write, and easy for machines to parse and generate. JSON uses a key-value pair structure, making it adequate for representing complex data structures like network configurations.

Additionally or alternatively to text-based network configurations, graph-based network configurations may be used. If the descriptions of network configurations are graph-based, converting 210 the network configuration may include using a graph embedding model to convert a graph-based network topology of the network configuration into the query vector representation. This means that the method 100 may involve transforming the network's structural layout into a numerical format using specialized algorithms designed for graph data.

Network topology may describe how different elements of a telecommunications network, such as nodes (e.g., routers, switches) and edges (connections between nodes), are arranged and interconnected. This structure can be represented as a graph, where nodes represent network devices and edges represent the connections between them. The network configuration is first represented as a graph. In this graph, nodes correspond to network devices (e.g., routers, switches, base stations, etc.), and edges represent the connections between these devices.

A graph embedding model is a type of algorithm that processes graph data and converts it into a set of vectors (numerical representations). These vectors capture the essential characteristics and relationships of the network elements in a way that a computer can easily analyze and compare. A graph embedding model, such as DeepWalk, Node2Vec, GraphSAGE, or GCN (Graph Convolutional Network), may be used to process the graph. These models may be designed to handle the complexities of graph data and learn the structural and relational properties of the nodes and edges. The model may learn embeddings (vector representations) for each node in the graph. These embeddings capture the local and global structural information about the network, such as which nodes are connected, the nature of their connections, and their roles within the network. Once the embeddings for individual nodes are learned, they are aggregated to form a single query vector representation for the entire network topology. This aggregation can involve combining the individual node embeddings through methods like averaging, summation, or using more sophisticated techniques that consider the overall network structure. The resulting query vector is a compact, numerical representation of the entire network topology. This vector can then be used for various tasks, such as comparing different network configurations, detecting anomalies, or optimizing network performance.

DeepWalk can be used to represent a telecommunication network's configuration by treating each network element (e.g., routers, switches) as nodes and connections as edges. Random walks on this graph simulate the exploration of network paths, and the resulting node sequences are used to learn embeddings that capture local connectivity patterns and neighborhood structures. Node2Vec can be applied similarly, with the added advantage of tuning the random walk strategy to capture more diverse patterns in the network. By balancing between BFS and DFS, Node2Vec can uncover both community-like structures and functional relationships within the network, creating more versatile embeddings. GraphSAGE's inductive capabilities make it suitable for dynamic telecommunication networks where new nodes (e.g., new devices or connections) are frequently added. By sampling and aggregating features from a node's local neighborhood, GraphSAGE can generate embeddings that reflect both the local and extended network topology, even for nodes not seen during training. GCNs can be used to integrate both the structural information of the telecommunication network and any additional node features (e.g., device types, capacities). By aggregating information from a node's neighbors, GCNs create embeddings that encapsulate both local and global network structures. This approach is powerful for complex networks with rich node feature sets.

For training, a large dataset of graph-based descriptions of telecommunication network configurations may be collected. The chosen model (e.g., custom model, DeepWalk, Node2Vec, GraphSAGE, or GCN) may be trained on this dataset to learn embeddings based on the graph's structure. The trained model may then be used to convert graph-based descriptions of network configurations into embeddings. The embeddings may then be used for various tasks, such as anomaly detection, configuration comparison, optimization, and more.

The act 220 of retrieving one or more historical vector representations from the vector database may include a similarity search based on a distance metric. This means that the method 200 may find past network configurations stored as vectors in a database by measuring how similar they are to the current network configuration vector. When a current/planned network configuration is converted into a vector representation (query vector), this vector may be used to search through a database of historical network configuration vectors. The goal is to find the historical vectors that are most similar to the query vector. To determine similarity, the system may use a distance metric.

A distance metric is a mathematical way to measure how far apart two vectors are in the vector space. Common distance metrics include Euclidean Distance, Cosine Similarity, Manhattan Distance. Euclidean Distance measures the straight-line distance between two vectors in the multidimensional space. Cosine Similarity measures the cosine of the angle between two vectors, indicating how similar their directions are. Manhattan Distance measures the distance between two vectors by summing the absolute differences of their corresponding components.

For the similarity search, the current/planned network configuration is converted into a vector (query vector) using a predefined method (e.g., NLP model, graph embedding). Historical network configurations are already stored in the database as vectors. The system calculates the distance between the query vector and each historical vector in the database using the chosen distance metric. Historical vectors may be ranked based on their distance to the query vector. Vectors with smaller distances are more similar to the query vector. The system retrieves the historical vectors that are closest to the query vector, i.e., those with the smallest distances. For example, imagine the current/planned network configuration is represented as a vector [1.0,2.5,3.1]. Historical configurations might be stored as vectors like [0.9,2.4,3.0] and [1.5,3.5,4.0]. Using Euclidean distance, the system calculates the distance between the current vector and each historical vector. The historical vector [0.9,2.4,3.0] might have a smaller distance compared to [1.5,3.5,4.0], indicating it is more similar to the current/planned configuration.

The act 230 of generating the anomaly warning may include computing a similarity score based on the one or more historical vector representations and the query vector representation. This means that the method/system evaluates how similar the current/planned network configuration is to past configurations by calculating a numerical score. If this score indicates a significant difference, the system generates a warning about a potential anomaly.

Both the current network configuration and historical network configurations are represented as vectors. These vectors are numerical representations that capture the key characteristics and structure of the network configurations. The system calculates a similarity score by comparing the query vector (current configuration) with one or more historical vectors. This may be done using a mathematical formula or distance metric.

For each historical vector, the system may calculate the distance or similarity measure between it and the query vector. If multiple historical vectors are considered, the system may aggregate the similarity scores. This could be done by averaging the scores or selecting the closest match. The computed similarity score may then be compared against a predefined threshold. This threshold may determine the acceptable level of similarity. If the similarity score falls below this threshold, it may suggest that the current configuration is significantly different from past configurations. If the similarity score indicates a large difference (i.e., falls below the threshold), the system may generate an anomaly warning. This warning may alert administrators to potential issues with the current network configuration, as it deviates substantially from known, historical configurations.

For example, suppose the current network configuration vector is [1.0,2.5,3.1] and a historical vector is [1.1,2.4,3.2]. Using cosine similarity, the score might be calculated as 0.99, indicating high similarity. If another historical vector is [5.0,6.0,7.0], the cosine similarity might be 0.2, indicating low similarity. If the threshold for normal operation is set at 0.9, the first vector is within the acceptable range, while the second one is not. If the current configuration's similarity score to all historical vectors falls below 0.9, an anomaly warning may be generated.

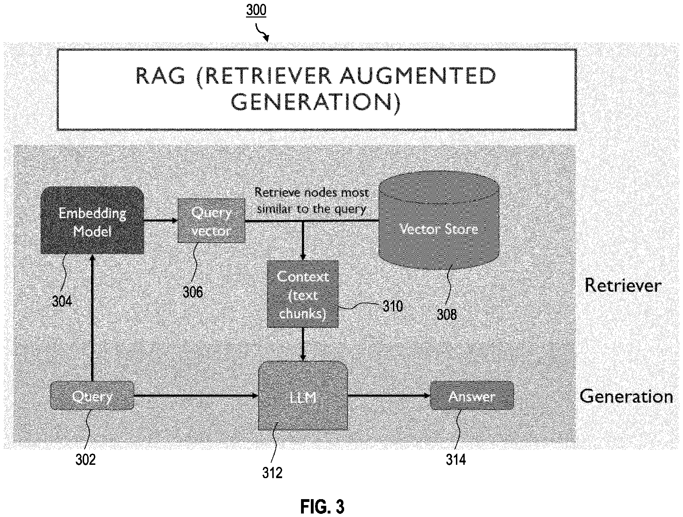

**Fig. 3** illustrates an embodiment of an apparatus or system 300 for determining an anomaly in a query network configuration 302 of a telecommunication network.

The apparatus 300 comprises processing circuitry configured to convert the query network configuration 302 of the telecommunication network into a corresponding query vector representation 306. The processing circuitry is further configured to retrieve one or more historical vector representations of historical configurations of the telecommunication network stored in a vector database 308 that are most similar to the query vector representation 306. The processing circuitry is further configured to generate an anomaly warning 314 if a difference between the one or more historical vector representations and the query vector representation 306 exceeds a threshold. The processing circuitry may comprise an embedding model 304 for converting the (text- or graph-based) query network configuration 302 into a corresponding query vector representation 306. The processing circuitry may further comprise the vector database (vector store) 308. Optionally, an LLM 312 may be used to generate the anomaly warning 314.

The system 300 may employ a Retriever-Augmented Generation (RAG) framework, which integrates both retrieval and generation components. The query network configuration 302, which can be a text-based configuration of the telecommunication network, may initially be processed by embedding model 304. The embedding model 304 converts the configuration 302 into a corresponding query vector representation 306. The embedding model 304 can utilize various pre-trained transformer models, such as Word2Vec, GloVe, FastText, ELMo, BERT, or GPT, to generate the query vector representation 306.

Once the query vector representation 306 is generated, it is used to retrieve one or more historical vector representations from vector store 308. The vector store 308 contains historical configurations of the telecommunication network stored as vector representations. The retrieval process may involve a similarity search, wherein the query vector representation 306 is compared with the stored historical vector representations to identify those that are most similar. This retrieval process may be facilitated by a context module 310, which processes text chunks (e.g. prompts) to aid in the answer generation.

The retrieved historical vector representations may then be provided to a large language model (LLM) 312. Based on the prompts, the LLM 312 may processes the query vector representation 306 along with the retrieved historical vector representations to determine if there is an anomaly. The LLM 312 may generate an anomaly warning 314 if the difference between the query vector representation 306 and the historical vector representations exceeds a predefined threshold. The anomaly warning 314 may serve as an indication that the current configuration 302 of the telecommunication network deviates significantly from historical configurations, suggesting a potential issue or anomaly.

The system 300 may be designed to handle various types of configurations, including but not limited to XML and JSON configurations. Additionally, the configurations can pertain to different aspects of the telecommunication network, such as base station configurations, core network configurations, or NFV configurations.

In summary, embodiments of the present disclosure provide a concept for anomaly detection in telecommunication network configurations. By leveraging advanced embedding models and a robust retrieval mechanism, the proposed concept may provide accurate and efficient identification of anomalies, thereby enhancing the reliability and performance of the telecommunication network.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (200) for determining an anomaly in a configuration (302) of a telecommunication network (100), the method (200) comprising
converting (210) the configuration (302) of the telecommunication network (100) into a corresponding query vector representation (306);
retrieving (220) one or more historical vector representations of historical configurations of the telecommunication network (100) stored in a vector database (308) that are most similar to the query vector representation (306); and
generating (230) an anomaly warning (314) if a difference between the one or more historical vector representations and the query vector representation (306) exceeds a threshold.

2. The method (200) of claim 1, wherein converting (210) the configuration (302) comprises using a natural language processing, NLP, model (304) to convert a text-based configuration (302) into the query vector representation (306).

3. The method (200) of claim 1 or 2, wherein converting (210) the configuration (302) comprises generating an embedding (306) for the configuration (302) using a pre-trained transformer model (304).

4. The method (200) of claim 3, wherein the pre-trained transformer model (304) comprises at least one of Word2Vec, GloVe, FastText, ELMo, BERT, or GPT.

5. The method (200) of any one of the previous claims, wherein converting (210) the configuration (302) comprises using a graph embedding model to convert a network topology of the configuration (302) into the query vector representation (306).

6. The method (200) of claim 5, wherein the graph embedding model comprises at least one of DeepWalk, Node2Vec, or a Graph Convolutional Network, GCN.

7. The method (200) of any one of the previous claims, wherein retrieving (220) one or more historical vector representations from the vector database (308) comprises a similarity search based on a distance metric.

8. The method (200) of any one of the previous claims, wherein generating (230) the anomaly warning comprises computing a similarity score based on the one or more historical vector representations and the query vector representation (306).

9. The method (200) of any one of the previous claims, wherein generating (230) the anomaly warning comprises converting the configuration (302) into the corresponding query vector representation, and comparing the query vector representation (306) with the one or more historical vector representations.

10. The method (200) of any one of the previous claims, wherein the configuration (302) comprises at least one of Extensible Markup Language, XML, or JavaScript Object Notation, JSON.

11. The method (200) of any one of the previous claims, further comprising
storing a plurality of historical configurations of the telecommunication network (100) in the vector database (308).

12. The method (200) of any one of the previous claims, wherein the configuration (302) comprises at least one of a base station configuration, a core network configuration, or Network Function Virtualization, NFV, configuration.

13. A computer program comprising instructions which, when the program is executed by a computer, cause the computer to carry out the method (200) of any one of the previous claims.

14. An apparatus for determining an anomaly in a configuration (302) of a telecommunication network (100), the apparatus comprising processing circuitry configured to
convert the configuration (302) of the telecommunication network (100) into a corresponding query vector representation (306);
retrieve one or more historical vector representations of historical configurations of the telecommunication network (100) stored in a vector database (308) that are most similar to the query vector representation (306); and
generate an anomaly warning (314) if a difference between the one or more historical vector representations and the query vector representation (306) exceeds a threshold.
